# EUROPÄISCHE PATENTSCHRIFT

(11) **EP 3 622 675 B1**
(45) Veröffentlichungstag und Bekanntmachung des Hinweises auf die Patenterteilung: **24.02.2021**
(21) Anmeldenummer: 18725135.0
(22) Anmeldetag: 04.05.2018
(51) Int. Cl.: H04L 12/40, H04L 29/06, H04L 12/28, H04L 12/46, H04L 29/08

(54) **PROGRAMMIERBARER STECKER**
PROGRAMMABLE PLUG
CONNECTEUR PROGRAMMABLE

(30) Priorität: 08.05.2017 DE 102017109862
(43) Veröffentlichungstag der Anmeldung: 18.03.2020
(73) Patentinhaber: Webasto SE, 82131 Stockdorf (DE)
(72) Erfinder: SONNEK, Sebastian, 82131 Stockdorf (DE); SCHLÖGL, Konrad, 82131 Stockdorf (DE)
(74) Vertreter: Zech, Stefan Markus
(86) Internationale Anmeldenummer: PCT/EP2018/061529
(87) Internationale Veröffentlichungsnummer: WO 2018/206436

(56) Entgegenhaltungen:
- EP-A1- 2 061 206
- DE-A1-102012 222 069
- D. Gornicki: "GSM Fernsteuerung, Version W-Bus v9.x, Bedienungsanleitung", , 1. Oktober 2015 (2015-10-01), Seiten 1-28, XP055486031, Boizenburger Str. 30, D-12619 Berlin Gefunden im Internet: URL:www.danhag.de [gefunden am 2018-06-20]

## Beschreibung

Die Erfindung betrifft eine Gatewayeinrichtung zur Steuerung einer, insbesondere nachgerüsteten, Klimaeinrichtung eines Fahrzeugs, ein Fahrzeug mit einer solchen Gatewayeinrichtung und ein Verfahren zur Inbetriebnahme einer Klimaeinrichtung bei einem Fahrzeug.

Beim Nachrüsten einer Klimaeinrichtung, insbesondere einer Standheizung oder einem Zuheizer, müssen verschiedene Komponenten der Klimaeinrichtung nachträglich in einem Fahrzeug montiert und an verschiedene, bereits werksseitig eingebaute Komponenten des Fahrzeugs angeschlossen werden, wie beispielsweise an die Fahrzeugbatterie, den Kraftstofftank, ein Gebläse oder eine Lüfterklappe des Fahrzeugs. Insbesondere das Anschließen einer nachrüstbaren Klimaeinrichtung an die vorhandene Fahrzeugelektrik bzw. -elektronik ist kompliziert, aufwendig und fehleranfällig.

Die Verkabelung in Fahrzeugen ist im Hinblick auf die übertragenen Signale, die verwendeten Anschlüsse und die verlegten Leitungen einerseits fahrzeugspezifisch, d.h. abhängig vom Fahrzeughersteller und vom Fahrzeugmodell. Andererseits können für verschiedene nachrüstbare Klimaeinrichtungen, insbesondere verschiedene Typen und Modelle von Standheizungen oder Zuheizern, jeweils unterschiedliche Signale, Anschlüsse und Leitungen vorgesehen bzw. notwendig sein. Die Verkabelung bei der Nachrüstung ist also auch klimaeinrichtungsspezifisch. Häufig sind in Fahrzeug vorhandene Anschlüsse nicht mit den Anschlüssen einer nachrüstbaren Klimaeinrichtung kompatibel. In modernen Fahrzeugen werden Bussysteme zur Kommunikation zwischen den verschiedenen Komponenten des Fahrzeugs eingesetzt. Die Bussysteme eines Fahrzeugs können sicherheitsrelevant sein. Sie sind häufig nicht ohne Weiteres für nachrüstbare Komponenten zugänglich.

Heute ist es beim Nachrüsten einer Klimaeinrichtung häufig notwendig, vorhandene Kommunikationsleitungen aufzutrennen bzw. zu zerschneiden, um geeignete Anschlüsse für eine nachrüstbare Klimaeinrichtung einzusetzen. Solche Eingriffe bei der Nachrüstung können Fehlfunktionen in der bestehenden fahrzeuginternen Kommunikation verursachen, wenn sie nicht fachgerecht ausgeführt werden. Außerdem müssen beim Einbau und der Inbetriebnahme einer konkreten Klimaeinrichtung für jedes Fahrzeug jeweils andere fahrzeugspezifische technische Gegebenheiten berücksichtigt werden. Das Nachrüsten ist dadurch kompliziert und zeitaufwendig.

Eine Bedienungsanleitung einer GSM-Fernsteuerung ist bekannt aus dem Dokument D. Gornicki: "GSM Fernsteuerung, Version W-Bus v9.x, Bedienungsanleitung", 1. Oktober 2015, Seiten 1-28, XP055486031, Boizenburger Str. 30, D-12619 Berlin, gefunden am 20. Juni 2018 im Internet, URL: www.danhag.de.

EP 2 061 206 A1 betrifft allgemein eine elektronische Steuereinheit mit einer Gateway-Funktion zur Verbindung einer Vielzahl von Kommunikationsnetzwerken in einem Fahrzeug sowie ein Kommunikationssystem und ein Kommunikationsverfahren.

Ausgehend von diesem Stand der Technik stellt sich die vorliegende Erfindung die Aufgabe, das Nachrüsten einer Klimaeinrichtung in einem Fahrzeug sicherer, einfacher und schneller zu ermöglichen. Insbesondere sollen verschiedene Klimaeinrichtungen in verschiedenen Fahrzeugen einfach und schnell zu installieren sein.

Diese Aufgabe wird durch eine Gatewayeinrichtung gemäß Anspruch 1 gelöst.

Insbesondere wird die Aufgabe gelöst durch eine Gatewayeinrichtung zur Steuerung einer, insbesondere nachgerüsteten, Klimaeinrichtung eines Fahrzeugs, umfassend:
- mindestens einen Steckkontakt zur Verbindung der Gatewayeinrichtung mit einer Klimaeinrichtung oder mit einer Klimaeinrichtung und einer Fahrzeugkomponente;
- eine Empfangseinheit zum Empfangen von Konfigurationsdaten zum Einstellen einer Steckerkonfiguration der Gatewayeinrichtung;
- eine dem Steckkontakt zugeordnete Konfigurationsschaltung, die dazu ausgebildet ist, basierend auf Konfigurationsdaten, zwischen mindestens einem ersten Schaltzustand des Steckkontakts, in dem der Steckkontakt dazu ausgebildet ist eine erste Funktion auszuüben, und mindestens einem zweiten Schaltzustand des Steckkontakts, in dem der Steckkontakt dazu ausgebildet ist eine zweite Funktion auszuüben, umzuschalten,
wobei der Steckkontakt in einem ersten Schaltzustand mit einem ersten Bus-Terminierungswiderstand und in einem zweiten Schaltzustand mit einem zweiten Bus-Terminierungswiderstand beschaltet ist.

Die Gatewayeinrichtung ist insbesondere dazu ausgebildet, Steuerbefehle zur Steuerung einer Klimaeinrichtung, wie beispielsweise einer Standheizung oder eines Zuheizers, zu erzeugen. Ein Steckkontakt ist insbesondere elektrisch leitend, vorzugsweise als ein Steckstift, vorzugsweise aus einem metallischen Material, ausgebildet. Insbesondere bezieht sich die Steckerkonfiguration auf eine Beschaltung und/oder Belegung des mindestens einen Steckkontakts. Unter einer Steckerkonfiguration kann beispielsweise die Festlegung eines Steckkontakts als Eingang oder Ausgang, als analoger oder digitaler Anschluss und/oder die Zuweisung einer/s bestimmen Signalform oder Signalpegels, insbesondere Spannungswerts, an einen Steckkontakt verstanden werden. Vorzugsweise sind mehrere Steckkontakte vorgesehen. Die Gatewayeinrichtung kann außerdem auch Steckkontakte aufweisen, denen keine Konfigurationsschaltung zugeordnet ist, d.h. Steckkontakte, die nicht konfigurierbar sind. Als eine Fahrzeugkomponente kann beispielsweise eine Fahrzeugbatterie, ein Fahrzeugmasseanschluss, eine Lüfterklappe, ein Gebläse oder ein fahrzeuginterner Datenbus verstanden werden, während die Klimaeinrichtung insbesondere ein Heizgerät, mindestens eine Klimabusleitung und/oder ein Bedienelement umfasst.

Erfindungsgemäß können die Konfigurationsdaten Steuerbefehle zum Einstellen einer Steckerkonfiguration der Gatewayeinrichtung umfassen und/oder Steuerbefehle basierend auf den Konfigurationsdaten erzeugt werden. Insbesondere umfasst die Gatewayeinrichtung einen Datenspeicher zum Speichern der Konfigurationsdaten, wobei insbesondere gespeicherte Konfigurationsdaten ausgelesen und/oder weiterverarbeitet werden, um darauf basierend eine Steckerkonfiguration einzustellen. Konfigurationsdaten beinhalten insbesondere fahrzeugspezifische und/oder klimaeinrichtungsspezifische Informationen über vorhandene bzw. erforderliche Leitungen, Anschlüsse und Signale. Insbesondere beinhalten die Konfigurationsdaten Informationen, wie ein bestimmter Steckkontakt der Gatewayeinrichtung ausgebildet sein muss, damit eine bestimmte Fahrzeugkomponente oder eine Klimaeinrichtung, bzw. eine Komponente der Klimaeinrichtung, an den Steckkontakt funktionierend anschließbar ist.

Eine Idee der Erfindung ist es, eine Gatewayeinrichtung mit mindestens einem programmierbaren Steckkontakt vorzusehen, der mehrere Funktionen, insbesondere eine Doppelfunktion, umfassend eine erste Funktion und eine zweite Funktion, ausüben kann, je nachdem welche Funktion für die Steuerung einer konkreten Klimaeinrichtung in einem konkreten Fahrzeug erforderlich ist. Dafür ist dem Steckkontakt eine Konfigurationsschaltung zugeordnet, die vorzugsweise ohne manuellen Eingriff, basierend auf Konfigurationsdaten den Steckkontakt verschieden beschalten kann, nämlich mindestens wahlweise in einem ersten und einem zweiten Schaltzustand, je nach erforderlicher Funktion des Steckkontakts. Insbesondere ist der Steckkontakt zwischen einem ersten Schaltzustand und einem zweiten Schaltzustand umschaltbar. Vorzugsweise werden auf ein Fahrzeug und eine Klimaeinrichtung abgestimmte Konfigurationsdaten mittels einer Konfigurationssoftware an die Gatewayeinrichtung übertragen, wobei die Gatewayeinrichtung die Konfigurationsschaltungen entsprechend schaltet und so eine gewünschte Steckerkonfiguration einstellt. Eine Konfigurationsschaltung umfasst vorzugsweise mindestens eine Transistorstufe. Beispielsweise sind in einem externen Datenspeicher Konfigurationsdaten hinterlegt, die sich auf eine Vielzahl möglicher Kombinationen von Fahrzeugmodellen und verschiedener, insbesondere nachrüstbarer, Klimaeinrichtungen beziehen. Eine erfindungsgemäße Gatewayeinrichtung mit konfigurierbaren Steckkontakten hat den Vorteil, dass sie sehr flexibel für eine Vielzahl verschiedener Fahrzeugmodelle und Klimaeinrichtungen einsetzbar ist. Mit der Gatewayeinrichtung als einheitlicher Hardware-Komponente ist es einfacher und schneller möglich, eine Klimaeinrichtung bei einem Fahrzeug nachzurüsten, da die Steckerkonfiguration einer Gatewayeinrichtung fallabhängig für jede Einbausituation konfigurierbar ist, so dass die Gatewayeinrichtung jeweils abgestimmte Anschlüsse bereitstellt. Beispielsweise kann durch fahrzeug- und/oder klimaeinrichtungsspezifisch bereitgestellte Kabelbäume, die an das geeignet konfigurierte Gateway anschließbar sind, die Einbauzeit für eine nachrüstbare Klimaeinrichtung deutlich verkürzt werden.

In einer vorteilhaften Weiterbildung der Erfindung ist der Steckkontakt in einem ersten Schaltzustand als Ausgangskontakt und in einem zweiten Schaltzustand als Eingangskontakt ausgebildet. Insbesondere ist der Steckkontakt zur Allzweckeingabe/-ausgabe (engl.: General Purpose Input/Output, GPIO) ausgebildet, wobei die Funktion des Steckkontakts als Eingang oder Ausgang durch die Konfigurationsschaltung umschaltbar ist. Einem Steckkontakt ist vorzugsweise ein integrierter Schaltkreis, insbesondere mit mindestens einem Transistor, zugeordnet, um eine Ausgangsspannung an einen Steckkontakt anzulegen oder eine an einem Steckkontakt anliegende Eingangsspannung auszulesen. Beispielsweise umfasst eine Konfigurationsschaltung einen schaltbaren sog. Pull-Up- und/oder Pull-Down-Widerstand, um einen Grundzustand, insbesondere einen Grundspannungspegel, eines Eingangskontakts festzulegen. Eine solche Gatewayeinrichtung ist flexibel konfigurierbar, je nachdem welche Ein- oder Ausgänge zum Anschließen einer Klimaeinrichtung in einem Fahrzeug in einem konkreten Fall benötigt werden.

In einer vorteilhaften Weiterbildung der Erfindung ist der Steckkontakt in einem ersten Schaltzustand als ein analoger Anschluss und in einem zweiten Schaltzustand als ein digitaler Anschluss ausgebildet. Insbesondere kann ein Steckkontakt zur digitalen Buskommunikation oder zur Übertragung eines pulsweitenmodulierten (PWM) Signals ausgebildet sein. Ein Steckkontakt kann als ein Eingang oder Ausgang für ein analoges Spannungssignal, vorzugsweise ein analoges Messsignal, beispielsweise eines externen Temperatursensors, ausgebildet sein. Eine solche Gatewayeinrichtung ist flexibel konfigurierbar, je nachdem welche Art von Signalen, insbesondere Spannungssignalen, zum Betrieb einer Klimaeinrichtung in einem Fahrzeug in einem konkreten Fall übertragen werden müssen.

In einer vorteilhaften Weiterbildung der Erfindung ist an dem Steckkontakt in einem ersten Schaltzustand ein erster Spannungswert und in einem zweiten Schaltzustand ein zweiter Spannungswert anlegbar bzw. abgreifbar. Vorzugsweise kann ein Spannungswert zwischen 0 und 48 Volt, insbesondere zwischen 0 und 32 V, regelbar sein, insbesondere stufenlos. Insbesondere können in Schaltzuständen Spannungswerte eingestellt sein, die einer Versorgungsspannung der Gatewayeinrichtung und/oder einer Fahrzeugbatterie entsprechen, beispielsweise 12 V, 24 V, 32 V oder 48 V. Insbesondere ist der Steckkontakt als ein Datenbusanschluss zur bidirektionalen Datenkommunikation, vorzugsweise als ein CAN-Busanschluss, ausgebildet. Insbesondere sind Spannungswerte einstellbar, die standardisierten Spannungen für eine Buskommunikation entsprechen, beispielsweise von 1,5 V für einen CAN-Low-Steckkontakt, 3,5 V für CAN-High-Steckkontakt und 2,5 V für einen Ruhezustand, oder davon abweichende Spannungswerte für eine Buskommunikation, die von einem bestimmten Fahrzeughersteller typischerweise verwendet werden. Insbesondere können durch eine Konfigurationsschaltung maximal zulässige Spannungswerte festgelegt werden. Eine solche Gatewayeinrichtung hat den Vorteil, dass eingehende oder ausgehende Spannungssignale an den Steckkontakten fahrzeug- und/oder klimaeinrichtungsspezifisch flexibel einstellbar sind und dabei sicher betrieben werden kann.

In einer vorteilhaften Weiterbildung der Erfindung ist der Steckkontakt in einem ersten Schaltzustand als ein Datenbusanschluss zur bidirektionalen Datenkommunikation, insbesondere als ein LIN-Busanschluss, und in einem zweiten Schaltzustand zur Übertragung eines PWM-Signals oder als ein proprietärer Busanschluss ausgebildet ist. Ein proprietärer Busanschluss ist beispielsweise ein W-Bus, insbesondere zur Kommunikation mit einer Klimaeinrichtung, insbesondere einem Heizgerät einer Standheizung oder eines Zuheizers oder einem Bedienelement. Insbesondere weist ein solcher Steckkontakt eine Doppelfunktion als Datenbusanschluss zur Kommunikation oder als Ein- oder Ausgang für ein PWM-Signal, insbesondere zur Steuerung einer Fahrzeugkomponente, wie einer Lüfterklappe oder einem Gebläse, oder einer Komponente einer Klimaeinrichtung, auf. Ein LIN-Busanschluss wird beispielsweise mit einer Versorgungsspannung, insbesondere wahlweise 12 V oder 32 V, betrieben. Eine Konfigurationsschaltung zur Erzeugung eines PWM-Signals ist insbesondere derart ausgebildet, dass der Tastgrad des PWM-Signals frei einstellbar ist und/oder die Amplitudenspannung bis zur Höhe der Versorgungsspannung der Gatewayeinrichtung betragen kann, z.B. 12 V, 24 V, 32 V oder 48 V. Die Gatewayeinrichtung kann mehrere Steckanschlüsse umfassen, die wahlweise als LIN-Busanschluss oder als proprietärer Busanschluss, insbesondere als W-Busanschluss, konfigurierbar sind. Auf diese Weise ist die Steckerkonfiguration der Gatewayeinrichtung für verschiedene Anwendungsfälle flexibel programmierbar bzw. einstellbar.

Gemäß der Erfindung ist der Steckkontakt in einem ersten Schaltzustand mit einem ersten Bus-Terminierungswiderstand und in einem zweiten Schaltzustand mit einem zweiten Bus-Terminierungswiderstand beschaltet. Auf diese Weise ist die Busterminierung einer an den Steckkontakt anschließbaren Datenbusleitung einstellbar. Eine Konfigurationsschaltung umfasst beispielsweise einen schaltbaren Terminierungswiderstand von 120 Ω, insbesondere für einen Steckkontakt, der als CAN-Busanschluss konfiguriert ist, oder schaltbare 1 kΩ-, 10 kΩ- und/oder 30kΩ-Terminierungswiderstände, insbesondere für einen Steckkontakt der als LIN-Busanschluss oder W-Busanschluss konfigurierbar ist. Durch eine einstellbare Terminierung kann die Störung der Buskommunikation in Abhängigkeit des an einen Steckkontakt anzuschließenden Datenbussystems verhindert werden.

In einer vorteilhaften Weiterbildung der Erfindung ist die Empfangseinheit dazu ausgebildet, drahtlos Konfigurationsdaten zu empfangen, insbesondere mittels Bluetooth. Es ist denkbar, Konfigurationsdaten über eine Kabelverbindung an die Gatewayeinrichtung zu übertragen. Vorzugsweise ist eine Datenübertragung aber über eine Funkverbindung, beispielsweise über Bluetooth, WLAN bzw. Wifi, LTE oder GSM, drahtlos vorgesehen. Vorzugsweise umfasst die Gatewayeinrichtung einen Bluetooth-Empfänger. Auf diese Weise ist die Gatewayeinrichtung einfach konfigurierbar, insbesondere im bereits montierten Zustand.

In einer vorteilhaften Weiterbildung der Erfindung umfasst die Gatewayeinrichtung mindestens einen Temperatursensor zur Erfassung einer Bauteiltemperatur, beispielsweise eines Bus-Transceivers. Insbesondere ist ein Temperatursensor einem Steckkontakt zugeordnet, um den Steckkontakt und/oder die diesem Steckkontakt zugeordnete Konfigurationsschaltung vor Überhitzung, beispielsweise aufgrund eines Kurzschlusses, zu schützen. Ein Temperatursensor kann Bestandteil einer Konfigurationsschaltung sein, insbesondere in ein Bauteil davon integriert sein. Beispielsweise kann die Temperatur eines Bus-Transceivers, insbesondere eines Treiberbausteins, von einem Temperatursensor überwacht werden. Es können weitere Temperatursensoren vorgesehen sein, z.B. zur Überwachung eines Mikrocontrollers oder eines integrierten Schaltkreises für das Energiemanagement (engl.: PMIC, Power Management Integrated Circuit). Ein Temperatursensor hat den Vorteil, dass eine Bauteiltemperatur erfasst und überwacht werden kann, wobei im Fall einer Überhitzung eine Abschaltung des Steckkontakts, insbesondere basierend auf einem Steuerungsprogramm der Gatewayeinrichtung, vorgenommen wird. Durch eine Absicherung der Steckkontakte kann ein ungewünschter Eingriff in fahrzeuginterne Systeme vermieden werden.

In einer vorteilhaften Weiterbildung der Erfindung ist ein Steckkontakt mit einer selbstrückstellenden Sicherung verbunden, die vorzugsweise einen Kaltleiter, insbesondere in Form eines leitfähigen Polymers, aufweist. Eine selbstrückstellende Sicherung umfasst insbesondere einen PTC-Widerstand (engl.: PTC, Positive Temperature Coefficient), z.B. umfassend Silizium, eine Keramik oder ein Polymer, und unterbricht einen Schaltkreis bei einer Überhitzung. Insbesondere ist eine Konfigurationsschaltung derart ausgebildet, dass der Steckkontakt gegen einen Kurzschluss, beispielsweise bei einer falschen Verkabelung oder einer fehlerhaften Konfiguration, abgesichert ist. Eine selbstrückstellende Sicherung hat den Vorteil, dass die Gatewayeinrichtung gegen Überhitzung, die beispielsweise durch eine Überspannung aufgrund einer falsch an einen Steckkontakt angeschlossenen Komponente hervorgerufen wird, abgesichert ist, nach Wegfall der Störung aber wieder regulär betrieben werden kann. Durch eine Absicherung der Steckkontakte kann ein ungewünschter Eingriff in fahrzeuginterne Systeme vermieden werden.

In einer vorteilhaften Weiterbildung der Erfindung ist einem als Ausgangskontakt ausgebildeten Steckkontakt eine Überprüfungsschaltung zugeordnet, die dazu ausgebildet ist, die an dem Steckkontakt anliegende Ausgangsspannung abzugreifen und insbesondere mit einer festgelegten zulässigen Ausgangsspannung zu vergleichen. Durch eine Überprüfungsschaltung kann gewährleistet werden, dass von der Gatewayeinrichtung keine ungewünschten, insbesondere zu hohen, Spannungssignale an ein Fahrzeug übertragen werden, die zu einer Funktionsstörung führen können.

In einer vorteilhaften Weiterbildung der Erfindung ist mindestens ein Steckkontakt dazu ausgebildet für den Anschluss eines Hardware-Moduls, wie z.B. eines Piggy-Back -Moduls, konfiguriert zu werden. Ein solches Hardware-Modul kann dazu ausgebildet sein drahtlose Schnittstellen bereitzustellen, wie beispielsweise ein GSM-, LTE-, Wifi- und/oder GPS-Modul. Außerdem kann ein solches Hardware-Modul dazu ausgebildet sein drahtgebundene Schnittstellen um zusätzliche Funktionen zu erweitern, wie z.B. die Kommunikation über Ethernet und/oder USB.

In einer vorteilhaften Weiterbildung der Erfindung weist die Gatewayeinrichtung mindestens einen mehrpoligen Steckverbinder auf, dem der mindestens eine Steckkontakt zugeordnet ist. Der Steckverbinder kann als ein männlicher Steckanschluss mit stiftförmigen Steckkontakten ausgebildet sein, oder als ein weiblicher Steckanschluss mit einer Steckerbuchse, in der Steckkontakte angeordnet sind. Vorzugsweise ist mindestens einer der Steckkontakte konfigurierbar, weist insbesondere eine Mehrfach-, insbesondere Doppelfunktion, auf, während mindestens ein weiterer Steckkontakt nicht konfigurierbar ist, insbesondere eine unveränderliche Funktion ausübt, wie beispielsweise einen Eingang für eine Versorgungsspannung, einen Masseanschluss, einen Ausgang für eine LED, oder einen Anschluss für die Fahrzeugzündung. Insbesondere ist an einen mehrpoligen Steckverbinder mit einer erfindungsgemäß eingestellten Steckerkonfiguration ein fahrzeug- und/oder klimaeinrichtungsspezifisch bereitgestellter Kabelbaum anschließbar, dessen Leitungen der gewünschten Steckerkonfiguration entsprechend angeordnet sind. Insbesondere die Anordnung der Steckkontakte in einem Steckverbinder standardgemäß ausgeführt.

In einer vorteilhaften Weiterbildung der Erfindung weist die Gatewayeinrichtung mindestens einen ersten, vorzugsweise 16-poligen, Steckverbinder und einen zweiten, vorzugsweise 12-poligen, Steckverbinder auf. Ein erster Steckverbinder kann für Standardfunktionen konfigurierbar sein, die typischerweise für eine, insbesondere nachrüstbare, Klimaeinrichtung in Fahrzeugen erforderlich sind. Ein zweiter Steckverbinder kann insbesondere für optionale Zusatzfunktionen konfigurierbar sein, wobei der zweite Steckverbinder während des Betriebs einer Klimaeinrichtung auch ungenutzt sein kann. Auf diese Weise wird die flexible Einsetzbarkeit der Gatewayeinrichtung weiter erhöht.

Die genannte Aufgabe wird außerdem durch ein Fahrzeug gemäß Anspruch 13 gelöst, insbesondere durch ein Fahrzeug, dass eine erfindungsgemäße Gatewayeinrichtung umfasst.

Die genannte Aufgabe wird außerdem durch ein Verfahren gemäß Anspruch 14 gelöst, das insbesondere das Montieren einer erfindungsgemäßen Gatewayeinrichtung umfasst.

Insbesondere wird die Aufgabe gelöst durch ein Verfahren zur Inbetriebnahme einer Klimaeinrichtung, insbesondere einer Standheizung, bei einem Fahrzeug, das die folgenden Schritte umfasst:
- Montieren einer erfindungsgemäßen Gatewayeinrichtung, zur Steuerung der Klimaeinrichtung in dem Fahrzeug;
- Übertragen, vorzugsweise drahtlos, von klimaeinrichtungsspezifischen oder von klimaeinrichtungs- und fahrzeugspezifischen Konfigurationsdaten an eine Empfangseinheit der Gatewayeinrichtung;
- Ausführen von mindestens einem Steuerbefehl, der basierend auf den Konfigurationsdaten erzeugt wird, zum Einstellen einer Steckerkonfiguration der Gatewayeinrichtung, insbesondere mittels einer einem Steckkontakt zugeordneten Konfigurationsschaltung.

Das erfindungsgemäße Verfahren hat ähnliche Vorteile, wie sie bereits in Verbindung mit der erfindungsgemäßen Gatewayeinrichtung beschrieben wurden. Das Verfahren kann außerdem einige oder alle verfahrenstechnischen Merkmale umsetzen, die im Zusammenhang mit der Gatewayeinrichtung geschrieben sind. Das erfindungsgemäße Verfahren hat insbesondere den Vorteil, dass eine Gatewayeinrichtung als einheitlich hergestellte Hardware-Komponente montiert wird und, insbesondere basierend auf einer Konfigurationssoftware, durch übertragene Konfigurationsdaten je nach den vorgegebenen technischen Spezifikationen für ein bestimmtes Fahrzeug- und/oder Klimaeinrichtungsmodell konfigurierbar ist. Vorzugsweise werden Konfigurationsdaten über eine drahtlose Schnittstelle, wie z.B. Bluetooth, WLAN bzw. Wifi, LTE oder GSM, an die Gatewayeinrichtung übertragen und vorzugsweise gespeichert. Insbesondere werden Konfigurationsdaten aus einem Datenspeicher der Gatewayeinrichtung ausgelesen und daraus von einem auf der Gatewayeinrichtung ausgeführten Steuerprogramm Steuerbefehle erzeugt, aufgrund derer eine Konfigurationsschaltung geschaltet wird. Durch ein solches Verfahren kann die erforderliche Arbeitszeit für das Nachrüsten einer Klimaeinrichtung bzw. deren Inbetriebnahme bei einem Fahrzeug erheblich reduziert werden. Insbesondere müssen keine gesonderten Gatewayeinrichtungen mit passend vorgesehenen Steckerkonfigurationen für verschiedene Fahrzeugmodelle und/oder Klimaeinrichtungen bereitgestellt, vorrätig gehalten und jeweils verschieden verkabelt werden.

In einer vorteilhaften Weiterbildung des erfindungsgemäßen Verfahrens ist es vorgesehen, die Gatewayeinrichtung mit der Klimaeinrichtung oder mit einer Klimaeinrichtung und einer Fahrzeugkomponente zu verbinden, vorzugsweise durch Einstecken von Anschlussleitungen in einen klimaeinrichtungs- und/oder fahrzeugspezifisch konfigurierten Steckverbinder der Gatewayeinrichtung. Unter dem Verbinden der Gatewayeinrichtung mit der Klimaeinrichtung und/oder einer Fahrzeugkomponente kann ein unmittelbares oder mittelbares Verbinden verstanden werden. Bei einem mittelbaren Verbinden können insbesondere Leitungsabschnitte, vorzugsweise ein Kabelbaum, und weitere Komponenten zwischengeschaltet sein. Insbesondere wird ein klimaeinrichtungs- und/oder fahrzeugspezifisch bereitgestellter Kabelbaum in mindestens einen geeigneten konfigurierten Steckverbinder der Gatewayeinrichtung eingesteckt. Das Verfahren hat den Vorteil, dass mögliche Fehler bei der Verkabelung vermeidbar sind.

Ausführungsbeispiele der Erfindung werden nachfolgend anhand der Zeichnungen näher beschrieben. Hierbei zeigen:
- Figur 1: eine schematische Darstellung einer Ausführungsform einer erfindungsgemäßen Gatewayeinrichtung in einer perspektivischen Ansicht;
- Figur 2: eine schematisches Blockschaltbild einer Ausführungsform einer erfindungsgemäßen Gatewayeinrichtung;
- Figur 3: eine schematische Darstellung einer Ausführungsform eines erfindungsgemäßen Fahrzeugs mit einer erfindungsgemäßen Gatewayeinrichtung.

In der nachfolgenden Beschreibung der Erfindung werden für gleiche und gleich wirkende Elemente dieselben Bezugszeichen verwendet.

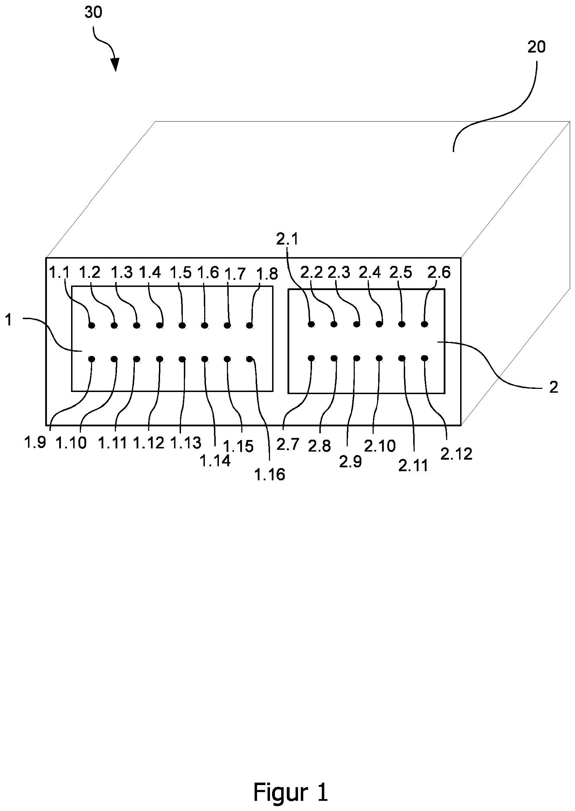

Figur 1 zeigt eine erfindungsgemäße Gatewayeinrichtung 30 in einem Gehäuse 20, die einen ersten Steckverbinder 1 und einen zweiten Steckverbinder 2 aufweist. Der erste Steckverbinder 1 ist 16-polig ausgebildet, verfügt also über 16 Steckkontakte 1.1 bis 1.16. Der zweite Steckverbinder 2 ist 12-polig ausgebildet, verfügt also über 12 Steckkontakte 2.1 bis 2.12. Die Steckkontakte sind hier als Kontaktstifte ausgeführt. Einige der Steckkontakte 1.1 bis 1.16 bzw. 2.1 bis 2.12 sind variabel konfigurierbar, insbesondere programmierbar, damit sie eine bestimmte Funktion ausüben können. Die übrigen Steckkontakte sind nicht konfigurierbar und üben eine unveränderliche Funktion aus, die durch ihre Beschaltung vorgegeben ist. Den konfigurierbaren Steckkontakten ist eine Konfigurationsschaltung zugeordnet, die den Steckkontakt je nach Schaltzustand so beschaltet, dass er eine der Beschaltung entsprechende Funktion ausüben kann. Insofern kann ein konfigurierbarer Steckkontakt eine Mehrfachfunktion, insbesondere Doppelfunktion, ausüben. Eine gewünschte Steckerkonfiguration ist über an die Gatewayeinrichtung 30 übertragene Konfigurationsdaten einstellbar.

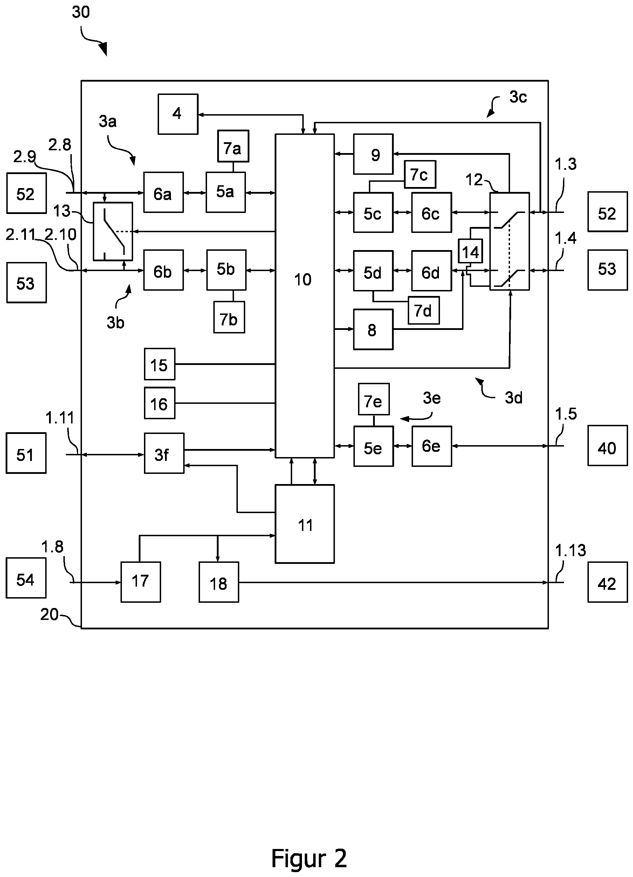

Figur 2 zeigt eine Darstellung einer Ausführungsform einer erfindungsgemäßen Gatewayeinrichtung 30 in einem Blockschaltbild. Die Gatewayeinrichtung 30 umfasst einen Mikrocontroller 10, der insbesondere eine Recheneinheit und eine Speichereinheit umfasst, und einen integrierten Schaltkreis für das Energiemanagement, PMIC 11. Außerdem umfasst die Gatewayeinrichtung einen internen Temperatursensor 15 und einen internen Drucksensor 16, um eine/n Umgebungstemperatur bzw. -druck der Gatewayeinrichtung, insbesondere eine/n Fahrzeuginnentemperatur bzw. -druck, zu erfassen, um darauf basierend Steuerbefehle für eine Klimaeinrichtung zu erzeugen. Die Gatewayeinrichtung 30 umfasst eine Bluetooth-Empfangseinheit 4 zum drahtlosen Empfangen von Konfigurationsdaten, die an die Gatewayeinrichtung 30 übertragen werden, beispielsweise in einer Werkstatt, um eine Steckerkonfiguration derjenigen konfigurierbaren Steckkontakte aller Steckkontakte 1.1 bis 1.16 und 2.1 bis 2.12 einzustellen. Es sind konfigurierbare Steckkontakte 1.3, 1.4, 1.5, 1.11, sowie 2.8 bzw. 2.9 und 2.10 bzw. 2.11 dargestellt, die über Konfigurationsschaltungen 3a bis 3f variabel beschaltbar sind. Über den Steckkontakt 1.8 ist die Gatewayeinrichtung 30 an eine Versorgungsspannung anschließbar, insbesondere an den positiven Pol einer Fahrzeugbatterie 54, z.B. mit 12 V, 24 V, 32 V oder 48 V. Ein Gleichspannungswandler 17 wandelt die eingehende Versorgungsspannung um, insbesondere auf eine geeignete Versorgungsspannung, z.B. 12 V, für andere Bauteile der Gatewayeinrichtung, wie z.B. verschiedene Schaltkreise, an die auch der PMIC 11 angeschlossen ist. Der PMIC 11 versorgt den Mikrocontroller 10 mit Energie und ist kommunikativ mit diesem verbunden. Die selbstrückstellende Sicherung 18, die insbesondere einen PTC-Widerstand aufweist, stellt sicher, dass die Gatewayeinrichtung 30 durch ein an den Kontakt 1.13 anschließbares Bedienelement 42, zum Beispiel einen Schalter zur manuellen Steuerung der Klimaeinrichtung 40, im Falle eines Kurzschlusses nicht beschädigt wird.

Die Konfigurationsschaltungen 3a bzw. 3b sind den Steckkontakten 2.8 und 2.9 bzw. 2.10 und 2.11 zugeordnet, die jeweils als ein zweidrahtiger Datenbusanschluss, z.B. als ein CAN-Busanschluss, ausgebildet sind, an den z.B. ein Gebläse 52 und/oder eine Lüfterklappe 53 anschließbar ist. Über Bus-Terminierungsschaltungen 6a bzw. 6b können die Steckkontakte mit einem geeigneten Abschlusswiderstand, z.B. von 120Ω, beschaltet werden. Die Bus-Transceiver 5a bzw. 5b sind über Temperatursensoren 7a bzw. 7b gegen Überhitzung geschützt. Das durch den Mikrocontroller 10 schaltbare Relais 13 umfasst eine Leiterbahnsicherung (nicht dargestellt), die die Steckkontakte 2.8, 2.9 bzw. 2.10, 2.11, insbesondere in einem unkonfigurierten Zustand, gegen einen Kurzschluss, zum Beispiel bei einer falschen Verkabelung der Gatewayeinrichtung 30, absichert. Eine Leiterbahnsicherung hat den Vorteil, dass die Buskommunikation, insbesondere eines empfindlichen CAN-Bussystems, dadurch nicht gestört wird.

Die Konfigurationsschaltungen 3c bzw. 3d sind den Steckkontakten 1.3 bzw. 1.4 zugeordnet. Der Steckkontakt 1.3 ist in einem ersten bzw. zweiten Schaltzustand entweder als ein LIN-Busanschluss oder als ein PWM-Eingang konfigurierbar. Der Steckkontakt 1.4 ist in einem ersten bzw. zweiten Schaltzustand entweder als ein LIN-Busanschluss oder als ein PWM-Ausgang konfigurierbar. Über Bus-Terminierungsschaltungen 5a bzw. 5b können die Steckkontakte 1.3 bzw. 1.4 mit geeigneten Abschlusswiderständen beschaltet werden, der Steckkontakt 1.3 beispielsweise mit 30 kΩ und der Steckkontakt 1.4 beispielsweise mit wahlweise 1 kΩ oder 30 kΩ. Die Bus-Transceiver 5a bzw. 5b sind über Temperatursensoren 7a bzw. 7b gegen Überhitzung geschützt. Das durch den Mikrocontroller 10 schaltbare Relais 12 umfasst eine selbstrückstellende Sicherung 14, die insbesondere einen PTC-Widerstand umfasst, die die Steckkontakte 1.3 und 1.4, insbesondere in einem unkonfigurierten Zustand, gegen einen Kurzschluss absichert. Die Konfigurationsschaltung 3c umfasst eine PWM-Ausgangsschaltung 8, insbesondere um ein PWM-Signal zu verstärken. Durch die Konfigurationsschaltung 3d ist der Tastgrad des ausgegebenen PWM-Signals frei einstellbar und/oder die Amplitudenspannung kann bis zur Höhe der Versorgungsspannung der Gatewayeinrichtung 30 geregelt werden, z.B. bis zu 12 V, 24 V, 32 V oder 48 V. An den Steckkontakt 1.3 ist beispielsweise ein Gebläse 52 oder eine Lüfterklappe 53 anschließbar, deren Motoren durch ein PWM-Signal steuerbar sind, zum Beispiel im Hinblick auf die Drehzahl oder einen Klappenöffnungswinkel. Die Konfigurationsschaltung 3d umfasst eine PWM-Eingangsschaltung 9, um ein über den Steckkontakt 1.3 der Gatewayeinrichtung 30 eingegebenes PWM-Signal zu lesen.

Die Konfigurationsschaltung 3e ist dem Steckkontakt 1.5 zugeordnet, der in einem ersten Schaltzustand als ein LIN-Busanschluss und in einem zweiten Schaltzustand als ein proprietärer Busanschluss, hier als ein W-Busanschluss, insbesondere zum Anschluss einer Klimaeinrichtung 40 über eine Klimabusleitung 41, insbesondere zur Übertragung von Steuerbefehlen an ein Heizgerät 43, konfigurierbar ist. Der Bus-Transceiver 5e ist über einen Temperatursensor 7e gegen Überhitzung geschützt. Über eine Bus-Terminierungsschaltung 6e ist der Steckkontakt 5.1 wahlweise mit einem Terminierungswiderstand von 1 kΩ, 10 kΩ oder 30 kΩ beschaltbar.

Die Konfigurationsschaltung 3f ist dem Steckkontakt 1.11 zugeordnet, der in einem ersten Schaltzustand als ein Steckkontakt zur Allzweckeingabe/-ausgabe und in einem zweiten Schaltzustand als ein analoger Messeingang, insbesondere zum Anschluss eines externen Temperatursensors 51, ausgebildet ist. Ein externer Temperatursensor ist z.B. als ein NTC- oder ein PTC-Temperaturfühler ausgeführt.

Die in Figur 2 dargestellte Ausführungsform der erfindungsgemäßen Gatewayeinrichtung 30 stellt beispielhaft konfigurierbare Steckanschlüsse dar. Es können zusätzliche bzw. anders ausgeführte Konfigurationsschaltungen oder weniger Konfigurationsschaltungen vorgesehen sein, insbesondere Unterkombinationen der dargestellten Konfigurationsschaltungem 3a bis 3f. Eine erfindungsgemäße Gatewayeinrichtung 30 hat den Vorteil, dass die Kontakte so konfigurierbar sind, dass die Gatewayeinrichtung für eine Vielzahl verschiedener Fahrzeuge 50 und/oder Klimaeinrichtungen 40 verwendet werden kann, ohne die Hardware der Gatewayeinrichtung 30 dafür zu verändern. Durch Aufspielen einer geeigneten Steckerkonfiguration durch Übertragung von Konfigurationsdaten ist die Gatewayeinrichtung 30 flexibel einsetzbar.

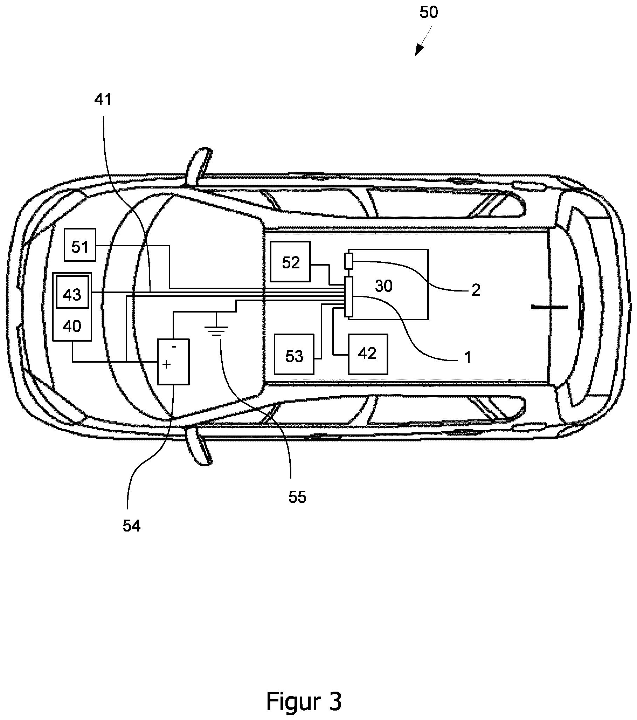

Figur 3 zeigt ein Fahrzeug 50, in dem eine erfindungsgemäße Gatewayeinrichtung 30 montiert ist, die über einen ersten Steckverbinder 1 und einen zweiten Steckverbinder 2 verfügt, wobei der zweite Steckverbinder 2 hier ungenutzt ist. Die Gatewayeinrichtung 30 ist mit einem Masseanschluss 55, einer Fahrzeugbatterie 54, über eine Klimabusleitung 41 (W-Bus) einer nachgerüsteten Klimaeinrichtung 40 mit einem Heizgerät 43, einem Bedienelement 42, einem externen Temperatursensor 51, einem Gebläse 52 und einer Lüfterklappe 53 verbunden. Die Steckerkonfiguration der Steckkontakte 1.1 bis 1.16 der Gatewayeinrichtung 30 ist so eingestellt, dass die genannten vorinstallierten Fahrzeugkomponenten und nachgerüsteten Komponenten der Klimaeinrichtung 40 über den geeignet konfigurierten Steckverbinder 1 über einen fahrzeug- und/oder klimaeinrichtungsspezifischen Kabelbaum passend verbunden ist. Das Nachrüsten und die Inbetriebnahme einer Klimaeinrichtung 40 in einem Fahrzeug 50 mit einer solchen Gatewayeinrichtung 30 ist einfach, schnell und zuverlässig durchführbar.

An dieser Stelle sei darauf hingewiesen, dass alle oben beschriebenen Teile für sich allein gesehen und in jeder Kombination, insbesondere die in den Zeichnungen dargestellten Details, als erfindungswesentlich beansprucht werden. Abänderungen hiervon sind dem Fachmann geläufig. Insbesondere ist es dem Fachmann geläufig, die einzelnen Ausführungsbeispiele in beliebiger Form zu kombinieren.

### Bezuaszeichenliste

- 1: Steckverbinder
- 1.1 bis 1.16: Steckkontakte
- 2: Steckverbinder
- 2.1 bis 2.12: Steckkontakte
- 3a bis 3f: Konfigurationsschaltung
- 4: Bluetooth-Empfangseinheit
- 5a bis 5e: Bus-Transceiver
- 6a bis 6e: Bus-Terminierungsschaltung
- 7a bis 7e: Temperatursensor
- 8: PWM-Ausgangsschaltung
- 9: PWM-Eingangsschaltung
- 10: Mikrocontroller
- 11: PMIC
- 12: Relais
- 13: Relais
- 14: selbstrückstellende Sicherung
- 15: interner Temperatursensor
- 16: interner Drucksensor
- 17: Gleichspannungswandler
- 18: selbstrückstellende Sicherung
- 20: Gehäuse
- 30: Gatewayeinrichtung
- 40: Klimaeinrichtung
- 41: Klimabusleitung
- 42: Bedienelement
- 43: Heizgerät
- 50: Fahrzeug
- 51: externer Temperatursensor
- 52: Gebläse
- 53: Lüfterklappe
- 54: Fahrzeugbatterie
- 55: Masseanschluss

## Patentansprüche

1. Gatewayeinrichtung zur Steuerung einer Klimaeinrichtung eines Fahrzeugs, umfassend:
- mindestens einen Steckkontakt (1.1 bis 1.16, 2.1 bis 2.12) zur Verbindung der Gatewayeinrichtung (30) mit einer Klimaeinrichtung oder mit einer Klimaeinrichtung und einer Fahrzeugkomponente;
- eine Empfangseinheit (4) zum Empfangen von Konfigurationsdaten zum Einstellen einer Steckerkonfiguration der Gatewayeinrichtung (30);
- eine dem Steckkontakt (1.1 bis 1.16, 2.1 bis 2.12) zugeordnete Konfigurationsschaltung (3a bis 3f), die dazu ausgebildet ist, basierend auf Konfigurationsdaten, zwischen
mindestens einem ersten Schaltzustand des Steckkontakts (1.1 bis 1.16, 2.1 bis 2.12), in dem der Steckkontakt (1.1 bis 1.16, 2.1 bis 2.12) dazu ausgebildet ist eine erste Funktion auszuüben, und
mindestens einem zweiten Schaltzustand des Steckkontakts (1.1 bis 1.16, 2.1 bis 2.12), in dem der Steckkontakt (1.1 bis 1.16, 2.1 bis 2.12) dazu ausgebildet ist eine zweite Funktion auszuüben, umzuschalten,
**dadurch gekennzeichnet, dass** der Steckkontakt (1.1 bis 1.16, 2.1 bis 2.12) in einem ersten Schaltzustand mit einem ersten Bus-Terminierungswiderstand und in einem zweiten Schaltzustand mit einem zweiten Bus-Terminierungswiderstand beschaltet ist.

2. Gatewayeinrichtung gemäß Anspruch 1,
**dadurch gekennzeichnet, dass**
der Steckkontakt (1.1 bis 1.16, 2.1 bis 2.12) in einem ersten Schaltzustand als Ausgangskontakt und in einem zweiten Schaltzustand als Eingangskontakt ausgebildet ist.

3. Gatewayeinrichtung gemäß Anspruch 1 oder 2,
**dadurch gekennzeichnet, dass**
der Steckkontakt (1.1 bis 1.16, 2.1 bis 2.12) in einem ersten Schaltzustand als ein analoger Anschluss und in einem zweiten Schaltzustand als ein digitaler Anschluss ausgebildet ist.

4. Gatewayeinrichtung gemäß einem der vorhergehenden Ansprüche,
**dadurch gekennzeichnet, dass**
an dem Steckkontakt (1.1 bis 1.16, 2.1 bis 2.12) in einem ersten Schaltzustand ein erster Spannungswert und in einem zweiten Schaltzustand ein zweiter Spannungswert anlegbar bzw. abgreifbar ist, wobei der Steckkontakt (1.1 bis 1.16, 2.1 bis 2.12) als ein Datenbusanschluss zur bidirektionalen Datenkommunikation ausgebildet ist.

5. Gatewayeinrichtung gemäß einem der vorhergehenden Ansprüche,
**dadurch gekennzeichnet, dass**
der Steckkontakt (1.1 bis 1.16, 2.1 bis 2.12) in einem ersten Schaltzustand als ein Datenbusanschluss zur bidirektionalen Datenkommunikation und in einem zweiten Schaltzustand zur Übertragung eines PWM-Signals oder als ein proprietärer Busanschluss ausgebildet ist.

6. Gatewayeinrichtung gemäß einem der vorhergehenden Ansprüche,
**dadurch gekennzeichnet, dass**
die Empfangseinheit (4) dazu ausgebildet ist, drahtlos Konfigurationsdaten zu empfangen.

7. Gatewayeinrichtung gemäß einem der vorhergehenden Ansprüche,
**dadurch gekennzeichnet, dass**
die Gatewayeinrichtung (30) mindestens einen Temperatursensor (7a bis 7e) zur Erfassung einer Bauteiltemperatur umfasst.

8. Gatewayeinrichtung gemäß einem der vorhergehenden Ansprüche,
**dadurch gekennzeichnet, dass**
ein Steckkontakt (1.1 bis 1.16, 2.1 bis 2.12) mit einer selbstrückstellenden Sicherung (14, 18) verbunden ist.

9. Gatewayeinrichtung gemäß Anspruch 8,
**dadurch gekennzeichnet, dass**
die Sicherung (14, 18) einen Kaltleiter aufweist.

10. Gatewayeinrichtung gemäß einem der vorhergehenden Ansprüche,
**dadurch gekennzeichnet, dass**
einem als Ausgangskontakt ausgebildeten Steckkontakt (1.1 bis 1.16, 2.1 bis 2.12) eine Überprüfungsschaltung zugeordnet ist, die dazu ausgebildet ist, die an dem Steckkontakt anliegende Ausgangsspannung abzugreifen und mit einer festgelegten zulässigen Ausgangsspannung zu vergleichen.

11. Gatewayeinrichtung gemäß einem der vorhergehenden Ansprüche,
**dadurch gekennzeichnet, dass**
die Gatewayeinrichtung (30) mindestens einen mehrpoligen Steckverbinder (1, 2) aufweist, dem der mindestens eine Steckkontakt (1.1 bis 1.16, 2.1 bis 2.12) zugeordnet ist.

12. Gatewayeinrichtung gemäß einem der vorhergehenden Ansprüche,
**dadurch gekennzeichnet, dass**
die Gatewayeinrichtung (30) mindestens einen ersten Steckverbinder (1) und einen zweitenSteckverbinder (2) aufweist.

13. Fahrzeug (50) umfassend eine Gatewayeinrichtung (30) gemäß einem der Ansprüche 1 bis 12.

14. Verfahren zur Inbetriebnahme einer Klimaeinrichtung bei einem Fahrzeug, das die folgenden Schritte umfasst:
- Montieren einer Gatewayeinrichtung (30) gemäß einem der Ansprüche 1 bis 12, zur Steuerung der Klimaeinrichtung (40) in dem Fahrzeug (50);
- Übertragen von klimaeinrichtungsspezifischen oder von klimaeinrichtungs- und fahrzeugspezifischen Konfigurationsdaten an eine Empfangseinheit (4) der Gatewayeinrichtung (30);
- Ausführen von mindestens einem Steuerbefehl, der basierend auf den Konfigurationsdaten erzeugt wird, zum Einstellen einer Steckerkonfiguration der Gatewayeinrichtung (30) mittels einer einem Steckkontakt (1.1 bis 1.16, 2.1 bis 2.12) zugeordneten Konfigurationsschaltung (3a bis 3f).

15. Verfahren gemäß Anspruch 14,
**gekennzeichnet durch**,
Verbinden der Gatewayeinrichtung (30) mit der Klimaeinrichtung (40) oder mit einer Klimaeinrichtung (40) und einer Fahrzeugkomponente durch Einstecken von Anschlussleitungen in einen klimaeinrichtungs- oder in einen klimaeinrichtungs- bzw. fahrzeugspezifisch konfigurierten Steckverbinder (1, 2) der Gatewayeinrichtung (30).

## Claims

1. Gateway device for controlling an air-conditioning device of a vehicle, comprising:
- at least one plug-in contact (1.1 to 1.16, 2.1 to 2.12) for connecting the gateway device (30) to an air-conditioning device or to an air-conditioning device and a vehicle component;
- a reception unit (4) for receiving configuration data for selecting a plug configuration of the gateway device (30);
- a configuration circuit (3a to 3f), associated with the plug-in contact (1.1 to 1.16, 2.1 to 2.12), that is configured to take configuration data as a basis for changing over between
at least one first switching state of the plug-in contact (1.1 to 1.16, 2.1 to 2.12), in which the plug-in contact (1.1 to 1.16, 2.1 to 2.12) is configured to perform a first function, and
at least one second switching state of the plug-in contact (1.1 to 1.16, 2.1 to 2.12), in which the plug-in contact (1.1 to 1.16, 2.1 to 2.12) is configured to perform a second function,
**characterized in that**
the plug-in contact (1.1 to 1.16, 2.1 to 2.12) is connected up to a first bus terminating resistor in a first switching state and to a second bus terminating resistor in a second switching state.

2. Gateway device according to Claim 1,
**characterized in that**
the plug-in contact (1.1 to 1.16, 2.1 to 2.12) is in the form of an output contact in a first switching state and in the form of an input contact in a second switching state.

3. Gateway device according to Claim 1 or 2,
**characterized in that**
the plug-in contact (1.1 to 1.16, 2.1 to 2.12) is in the form of an analogue connection in a first switching state and in the form of a digital connection in a second switching state.

4. Gateway device according to one of the preceding claims,
**characterized in that**
the plug-in contact (1.1 to 1.16, 2.1 to 2.12) is able to have a first voltage value applied to it or tapped off from it in a first switching state and a second voltage value applied to it or tapped off from it in a second switching state, wherein the plug-in contact (1.1 to 1.16, 2.1 to 2.12) is in the form of a data bus connection for bidirectional data communication.

5. Gateway device according to one of the preceding claims,
**characterized in that**
the plug-in contact (1.1 to 1.16, 2.1 to 2.12) is in the form of a data bus connection for bidirectional data communication in a first switching state and configured to transmit a PWM signal or in the form of a proprietary bus connection in a second switching state.

6. Gateway device according to one of the preceding claims,
**characterized in that**
the reception unit (4) is configured to receive configuration data wirelessly.

7. Gateway device according to one of the preceding claims,
**characterized in that**
the gateway device (30) comprises at least one temperature sensor (7a to 7e) for recording a component temperature.

8. Gateway device according to one of the preceding claims,
**characterized in that**
a plug-in contact (1.1 to 1.16, 2.1 to 2.12) is connected to a self-resetting fuse (14, 18).

9. Gateway device according to Claim 8,
**characterized in that**
the fuse (14, 18) has a PTC thermistor.

10. Gateway device according to one of the preceding claims,
**characterized in that**
a plug-in contact (1.1 to 1.16, 2.1 to 2.12) in the form of an output contact has an associated checking circuit configured to tap off the output voltage present on the plug-in contact and to compare it with a stipulated admissible output voltage.

11. Gateway device according to one of the preceding claims,
**characterized in that**
the gateway device (30) has at least one multipole connector (1, 2) that has the at least one plug-in contact (1.1 to 1.16, 2.1 to 2.12) associated with it.

12. Gateway device according to one of the preceding claims,
**characterized in that**
the gateway device (30) has at least one first connector (1) and a second connector (2).

13. Vehicle (50) comprising a gateway device (30) according to one of Claims 1 to 12.

14. Method for starting up an air-conditioning device in a vehicle, comprising the following steps:
- fitting a gateway device (30) according to one of Claims 1 to 12 for controlling the air-conditioning device (40) in the vehicle (50);
- transmitting configuration data, which is specific to an air-conditioning device or specific to an air-conditioning device and a vehicle, to a reception unit (4) of the gateway device (30);
- executing at least one control command, which is produced on the basis of the configuration data, for selecting a plug configuration of the gateway device (30) by means of a configuration circuit (3a to 3f) associated with a plug-in contact (1.1 to 1.16, 2.1 to 2.12).

15. Method according to Claim 14,
**characterized by**
connecting the gateway device (30) to the air-conditioning device (40) or to an air-conditioning device (40) and a vehicle component by plugging connecting lines into a connector (1, 2) of the gateway device (30), which connector is configured in a manner specific to the air-conditioning device or to the air-conditioning device and the vehicle.

## Revendications

1. Dispositif passerelle destiné à commander un dispositif de climatisation d'un véhicule, le dispositif passerelle comprenant :
- au moins un contact enfichable (1.1 à 1.16, 2.1 à 2.12) destiné à relier le dispositif passerelle (30) à un dispositif de climatisation ou à un dispositif de climatisation et un composant de véhicule ;
- une unité de réception (4) destinée à recevoir des données de configuration pour établir une configuration d'enfichage du dispositif passerelle (30) ;
- un circuit de configuration (3a à 3f) qui est associé au contact enfichable (1.1 à 1.16, 2.1 à 2.12) et qui est conçu pour commuter, sur la base de données de configuration, entre
au moins un premier état de commutation du contact enfichable (1.1 à 1.16, 2.1 à 2.12), dans lequel le contact enfichable (1.1 à 1.16, 2.1 à 2.12) est conçu pour remplir une première fonction, et
au moins un deuxième état de commutation du contact enfichable (1.1 à 1.16, 2.1 à 2.12), dans lequel le contact enfichable (1.1 à 1.16, 2.1 à 2.12) est conçu pour remplir une deuxième fonction,
**caractérisé en ce que**
le contact enfichable (1.1 à 1.16, 2.1 à 2.12) est relié, dans un premier état de commutation, à une première résistance de terminaison de bus et, dans un deuxième état de commutation, à une deuxième résistance de terminaison de bus.

2. Dispositif passerelle selon la revendication 1, **caractérisé en ce que**
le contact enfichable (1.1 à 1.16, 2.1 à 2.12) est conçu, dans un premier état de commutation, comme un contact de sortie et, dans un deuxième état de commutation, comme un contact d'entrée.

3. Dispositif passerelle selon la revendication 1 ou 2,
**caractérisé en ce que**
le contact enfichable (1.1 à 1.16, 2.1 à 2.12) est conçu, dans un premier état de commutation, comme une connexion analogique et, dans un deuxième état de commutation, comme une connexion numérique.

4. Dispositif passerelle selon l'une des revendications précédentes,
**caractérisé en ce que**
dans un premier état de commutation une première valeur de tension, et dans un deuxième état de commutation une deuxième valeur de tension, peuvent être appliquées ou prélevées au niveau du contact enfichable (1.1 à 1.16, 2.1 à 2.12), le contact enfichable (1.1 à 1.16, 2.1 à 2.12) étant conçu comme une connexion de bus de données destinée à la communication de données bidirectionnelle.

5. Dispositif passerelle selon l'une des revendications précédentes,
**caractérisé en ce que**
le contact enfichable (1.1 à 1.16, 2.1 à 2.12) est conçu dans un premier état de commutation comme une connexion de bus de données destinée à la communication de données bidirectionnelle et dans un deuxième état de commutation pour transmettre un signal PWM ou comme une connexion de bus propriétaire.

6. Dispositif passerelle selon l'une des revendications précédentes,
**caractérisé en ce que**
l'unité de réception (4) est conçue pour recevoir sans fil des données de configuration.

7. Dispositif passerelle selon l'une des revendications précédentes,
**caractérisé en ce que**
le dispositif passerelle (30) comprend au moins un capteur de température (7a à 7e) destiné à détecter une température de composant.

8. Dispositif passerelle selon l'une des revendications précédentes,
**caractérisé en ce**
**qu'**un contact enfichable (1.1 à 1.16, 2.1 à 2.12) est relié à un fusible à réarmement automatique (14, 18).

9. Dispositif passerelle selon la revendication 8,
**caractérisé en ce que**
le fusible (14, 18) comporte une résistance CTP.

10. Dispositif de passerelle selon l'une des revendications précédentes,
**caractérisé en ce que**
un contact enfichable (1.1 à 1.16, 2.1 à 2.12) conçu comme un contact de sortie est associé à un circuit de contrôle conçu pour prélever la tension de sortie appliquée au contact enfichable et pour la comparer à une tension de sortie admissible spécifiée.

11. Dispositif passerelle selon l'une des revendications précédentes,
**caractérisé en ce que**
le dispositif passerelle (30) comporte au moins un connecteur enfichable multipolaire (1, 2) auquel l'au moins un contact enfichable (1.1 à 1.16, 2.1 à 2.12) est associé.

12. Dispositif passerelle selon l'une des revendications précédentes,
**caractérisé en ce que**
le dispositif passerelle (30) comporte au moins un premier connecteur enfichable (1) et un deuxième connecteur enfichable (2).

13. Véhicule (50) comprenant un dispositif passerelle (30) selon l'une des revendications 1 à 12.

14. Procédé de mise en service d'un dispositif de climatisation dans un véhicule, le procédé comprenant les étapes suivantes :
- monter un dispositif passerelle (30) selon l'une des revendications 1 à 12, pour commander le dispositif de climatisation (40) dans le véhicule (50) ;
- transmettre des données de configuration, spécifiques au dispositif de climatisation ou spécifiques au dispositif de climatisation et au véhicule, à une unité de réception (4) du dispositif passerelle (30) ;
- exécuter au moins une instruction de commande, qui est générée sur la base des données de configuration, pour définir une configuration de connexion du dispositif passerelle (30) au moyen d'un circuit de configuration (3a à 3f) associé à un contact enfichable (1.1 à 1.16, 2.1 à 2.12).

15. Procédé selon la revendication 14,
**caractérisé en ce que**
le dispositif passerelle (30) est relié au dispositif de climatisation (40), ou est relié à un dispositif de climatisation (40) et un composant de véhicule, par enfichage de câbles de connexion dans un connecteur enfichable (1, 2) du dispositif passerelle (30), lequel connecteur est configuré de manière spécifique au dispositif de climatisation ou de manière spécifique au dispositif de climatisation ou au véhicule.
